# EUROPEAN PATENT APPLICATION

(11) **EP 2 549 766 A1**
(43) Date of publication of application: **23.01.2013**
(21) Application number: 11755930.2
(22) Date of filing: 17.03.2011
(51) Int. Cl.: H04N 13/04, G03B 35/16

(54) **REPLAY DEVICE**

(30) Priority: 17.03.2010 JP 2010060596
(71) Applicant: Panasonic Corporation, Kadoma-shi Osaka 571-8501 (JP)
(72) Inventor: MORIMOTO, Kenji, Osaka 540-6207 (JP)
(74) Representative: Eisenführ, Speiser & Partner
(86) International application number: PCT/JP2011/001580
(87) International publication number: WO 2011/114739

(57) **Abstract**

The reproduction apparatus 101 includes a video decoder 303 that decodes stereoscopic image data into left-eye image data and right-eye image data, a remote control receiver 205 that receives an instruction for adjusting an offset amount between the left-eye image data and the right-eye image data, a video signal processor 306 that adjusts an offset amount between the left-eye image data and the right-eye image data so as to be an offset amount based on the instruction, and a CPU 305 that determines whether an absolute value of the offset amount adjusted by the video signal processor 306 is not more than a limit value. When the CPU 305 determines that the adjusted absolute value of the offset amount is more than the limit value, the video signal processor 306 adjusts the offset amount between the left-eye image data and the right-eye image data so that the absolute value of the offset amount between the left-eye image data and the right-eye image data is not more than the limit value.

## Description

### Technical Field

The present invention relates to an apparatus for reproducing a three-dimensional (3D) image.

### Background Art

For example, a reproduction apparatus for reproducing a three-dimensional image reads a left-eye image signal and a right-eye image signal from a disc, and outputs the read left-eye image signal and right-eye image signal alternately to a display. When a display is used in combination with glasses with liquid crystal shutters, the display shows alternately a left-eye image represented by the left-eye image signal and a right-eye image represented by the right-eye image signal respectively inputted from the reproduction apparatus on a screen with a predetermined period. Further, the display controls the glasses with the liquid crystal shutters so that when the display shows the left-eye image represented by the left-eye image signal, a left-eye shutter of the glasses with the liquid crystal shutters is opened, and when the display shows the right-eye image represented by the right-eye image signal, a right-eye shutter of the glasses with the liquid crystal shutters is opened. The above configuration provides a left eye of a user wearing the glasses having the liquid crystal shutter with only a left-eye image and provides a right eye with only a right-eye image, so that the user can visually recognize a three-dimensional image.

### Prior Art Document

### Patent Document

Patent Document 1: JP-A-2002-82307

### Disclosure of Invention

### Problem to be Solved by the Invention

Various objects included in a left-eye image and a right-eye image are offset left and right to be arranged between the left-eye image and the right-eye image according to distances of the objects, so that when a user views a three-dimensional image, some objects pop up from the screen toward the user, whereas the other objects retract from the user with respect to the screen. In some cases, a pop-up quantity or a retraction quantity (hereinafter, "pop-up quantity") is not suitable for the user who visually recognizes the three-dimensional image or for user preferences, and thus the user feels strange.

In order to solve the above problem, the present invention has an object to provide a reproduction apparatus that can prevent a user from feeling strange when visually recognizing a three-dimensional image.

### Means for Solving the Problem

A three-dimensional image reproduction apparatus according to a first aspect of the present invention includes a decoder that decodes stereoscopic image data into left-eye image data and right-eye image data; a receiving unit that receives an instruction for adjusting an offset amount between the left-eye image data and the right-eye image data; a first adjusting unit that adjusts the offset amount between the left-eye image data and the right-eye image data to the offset amount based on the instruction; a determiner that determines whether an absolute value of the offset amount between the left-eye image data and the right-eye image data adjusted by the first adjusting unit is not more than a limit value; and a second adjusting unit that, when the absolute value of the offset amount between the left-eye image data and the right-eye image data adjusted by the first adjusting unit is more than the limit value, adjusts the offset amount between the left-eye image data and the right-eye image data so that the absolute value of the offset amount between the left-eye image data and the right-eye image data is not more than the limit value.

A three-dimensional image reproduction apparatus according to a second aspect of the present invention includes a receiving unit that receives an instruction for adjusting an offset amount between the left-eye image data and the right-eye image data; a first adjusting unit that adjusts the offset amount between the left-eye image data and the right-eye image data to the offset amount based on the instruction; a first determiner that determines whether the predetermined offset amount between the left-eye graphic data and the right-eye graphic data is larger than the offset amount between the left-eye image data and the right-eye image data adjusted by the first adjusting unit; a second adjusting unit that, when the first determiner does not determine that the predetermined offset amount between the left-eye graphic data and the right-eye graphic data is larger than the offset amount between the left-eye image data and the right-eye image data adjusted by the first adjusting unit, adjusts the offset amount between the left-eye graphic data and the right-eye graphic data so that the offset amount between the left-eye graphic data and the right-eye graphic data is larger than the offset amount between the left-eye image data and the right-eye image data adjusted by the first adjusting unit; a second determiner that determines whether the offset amount between the left-eye graphic data and the right-eye graphic data adjusted by the second adjusting unit is not more than a limit value; and a third adjusting unit that, when the offset amount between the left-eye graphic data and the right-eye graphic data adjusted by the second adjusting unit is more than the limit value, adjusts at least the offset amount between the left-eye graphic data and the right-eye graphic data so that the offset amount between the left-eye graphic data and the right-eye graphic data is maintained to be larger than the offset amount between the left-eye image data and the right-eye image data adjusted by the first adjusting unit and the offset amount between the left-eye graphic data and the right-eye graphic data adjusted by the second adjusting unit is not more than the limit value.

### Effect of the Invention

In the reproduction apparatus of the first aspect, the user can adjust the offset amount between the left-eye image data and the right-eye image data via the receiving unit, namely, a pop-up quantity of an image. As a result, the user can realize an agreeable pop-up quantity of an image.

When the user can adjust the offset amount between the left-eye image data and the right-eye image data, namely, the pop-up quantity of an image, problematically, the user excessively increases the pop-up quantity and thus easily gets tired during visual recognition, and excessively decreases the pop-up quantity and thus an image is broken (an image cannot be recognized).

In order to prevent occurrence of this problem, in the reproduction apparatus of the first aspect, the determination is made whether the absolute value of the offset amount adjusted by the user is not more than the limit value, and when the adjusted offset amount is more than the limit value, the offset amount between the left-eye image data and the right-eye image data is automatically adjusted so that the absolute value of the offset amount between the left-eye image data and the right-eye image data is not more than the limit value. As a result, when the user adjusts the offset amount, the pop-up quantity of an image is prevented from being too large or too small. This results in preventing occurrence of the problem such that the user excessively increases the pop-up quantity and thus gets tired during visual recognition, and excessively decreases the pop-up quantity (an image is excessively retracted) and thus an image is broken.

In the reproduction apparatus of the second aspect, similarly to the first aspect, the user can adjust the offset amount between the left-eye image data and the right-eye image data, namely, the pop-up quantity of an image via the receiving unit. As a result, the user can realize the agreeable pop-up quantity of an image.

The left-eye graphic data and the right-eye graphic data are occasionally superimposed on the left-eye image data and the right-eye image data, respectively. In this case, it is preferable from viewpoints of visibility of a three-dimensional image and prevention of tiredness of the user that the offset amount between the left-eye graphic data and the right-eye graphic data is larger than the adjusted offset amount between the left-eye image data and the right-eye image data, namely, left-eye graphic data and the right-eye graphic data look as if they pop up with respect to the left-eye image data and the right-eye image data. However, when the user can adjust the pop-up quantity of an image, namely, the offset amount between the left-eye image data and the right-eye image data, the offset amount between the left-eye image data and the right-eye image data adjusted by the user is occasionally larger than the offset amount of the graphic data. As a result, the left-eye graphic data and the right-eye graphic data occasionally look as if they are retracted to the fore side with respect to the left-eye image data and the right-eye image data.

In order to prevent occurrence of this problem, in the reproduction apparatus of the second aspect, when the predetermined offset amount between the left-eye graphic data and the right-eye graphic data is not larger than the adjusted offset amount between the left-eye image data and the right-eye image data, the offset amount between the left-eye graphic data and the right-eye graphic data is adjusted so that the offset amount between the left-eye graphic data and right-eye graphic data is larger than the adjusted offset amount between the left-eye image data and the right-eye image data. Therefore, the occurrence of the above problem is prevented.

When the offset amount of graphic data is adjusted in such a manner, the adjusted offset amount should be prevented from exceeding the limit value as described in the first aspect. Therefore, in the reproduction apparatus of the second aspect, when the adjusted offset amount of the graphic data is more than the limit value, at least the offset amount of the graphic data is adjusted so that the offset amount of the graphic data is maintained to be larger than the offset amount of the image data and the offset amount of the graphic data is not more than the limit value. As a result, the adjustment of the offset amount of the graphic data prevents the pop-up quantity of an image from being too large or too small. Therefore, this results in preventing the occurrence of the problem such that the user excessively increases the pop-up quantity and thus gets tired during visual recognition, and excessively decreases the pop-up quantity and thus an image is broken.

### Brief Description of Drawings

Fig. 1 is a configurational diagram illustrating a three-dimensional image reproduction and display system according to a first embodiment.
Fig. 2 is a configurational diagram illustrating a reproduction apparatus according to the first embodiment.
Fig. 3 is a configurational diagram illustrating a signal processor according to the first embodiment.
Fig. 4 is a conceptual diagram illustrating bit stream of a 3D image according to the first embodiment.
Fig. 5 is a conceptual diagram illustrating a method for composing and adjusting video data and graphics data according to the first embodiment.
Fig. 6 is a diagram for describing a method for detecting an offset between a left-eye image and a right-eye image according to the first embodiment.
Fig. 7 is a flowchart illustrating control for adjusting a pop-up quantity according to the first embodiment.
Fig. 8 is a conceptual diagram illustrating a method for composing and adjusting image signals including device GUI according to the first embodiment.
Fig. 9 is a flowchart illustrating control for adjusting a pop-up quantity of the device GUI according to the first embodiment.

### Mode for Carrying Out the Invention

### (First Embodiment)

### 1. Configuration of Three-dimensional image reproduction and display system

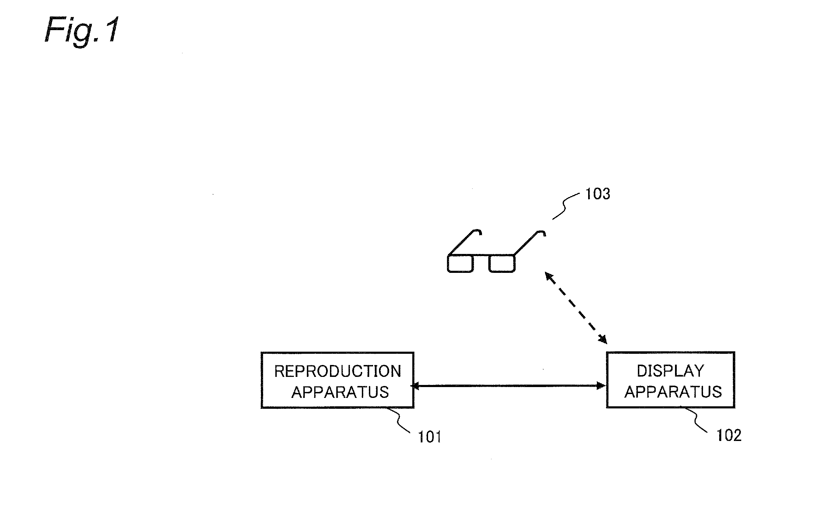

Fig. 1 illustrates a configuration of a three-dimensional image reproduction and display system. The three-dimensional image reproduction and display system includes a reproduction apparatus 101, a display apparatus 102, and 3D glasses 103. The reproduction apparatus 101 reproduces a three-dimensional image from a disc, and outputs it to the display apparatus 102. The display apparatus 102 displays the three-dimensional image, and displays a left-eye (L) image and a right-eye (R) image alternately. The display apparatus 102 transmits an image synchronizing signal to the 3D glasses 103 using a radio wave such as an infrared ray. The 3D glasses 103 have liquid crystal shutters in a left-eye lens unit and a right-eye lens unit, respectively, and alternately open and close the right and left liquid crystal shutters based on image synchronizing signal from the display apparatus 102. Concretely, when the display apparatus 102 displays the left-eye image, the left-eye liquid crystal shutter opens and the right-eye liquid crystal shutter closes. When the display apparatus 102 displays a right-eye image, the right-eye liquid crystal shutter opens and the left-eye liquid crystal shutter closes. Such a configuration provides only a left-eye image to a left eye of a user wearing the glasses with the liquid crystal shutters and provides only a right-eye image to a right eye, so that the user can visually recognize a three-dimensional image.

### 2. Three-Dimensional Image Reproduction Apparatus

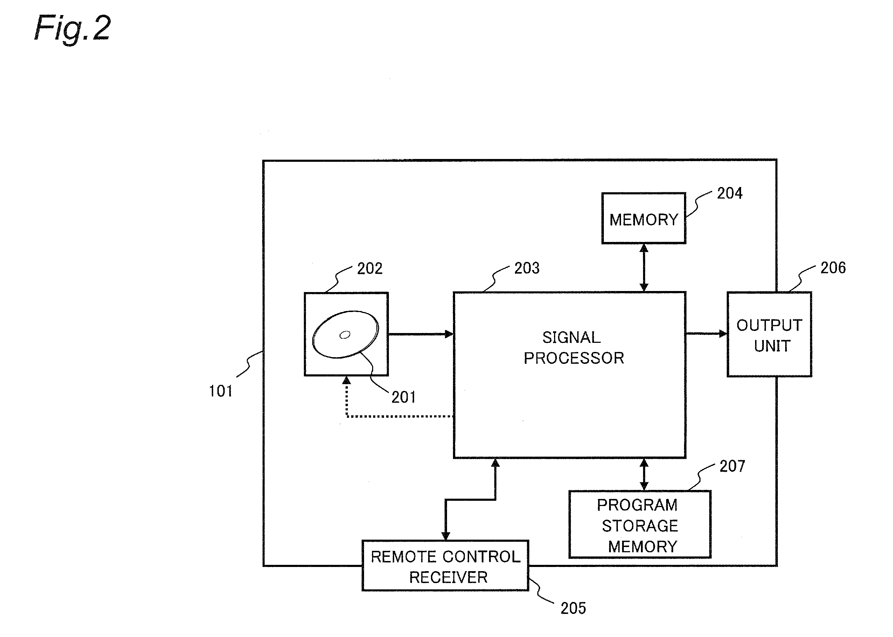

Fig. 2 illustrates a configuration of the reproduction apparatus 101. The reproduction apparatus 101 has a disc reproduction unit 202, a signal processor 203, a memory 204, a remote control receiver 205, an output unit 206, and a program storage memory 207. The remote control receiver 205 receives instructions for start and pause of reproduction, and pop-up quantity correcting from the user. The disc reproduction unit 202 reproduces 2D image, 3D image, audio, graphics data, and the like from a disc 201. The video signal processor 203 decodes data such as image (video), sound(audio), graphics (characters and menu images) reproduced by the disc reproduction unit 202, and temporarily stores them in the memory 204. The output unit 206 outputs a signal with a predetermined format from the signal processor 203. The program storage memory 207 stores device GUI. The device GUI is graphic data for guiding operations and the like of the reproduction apparatus.

### 3. Configuration of the Signal Processor

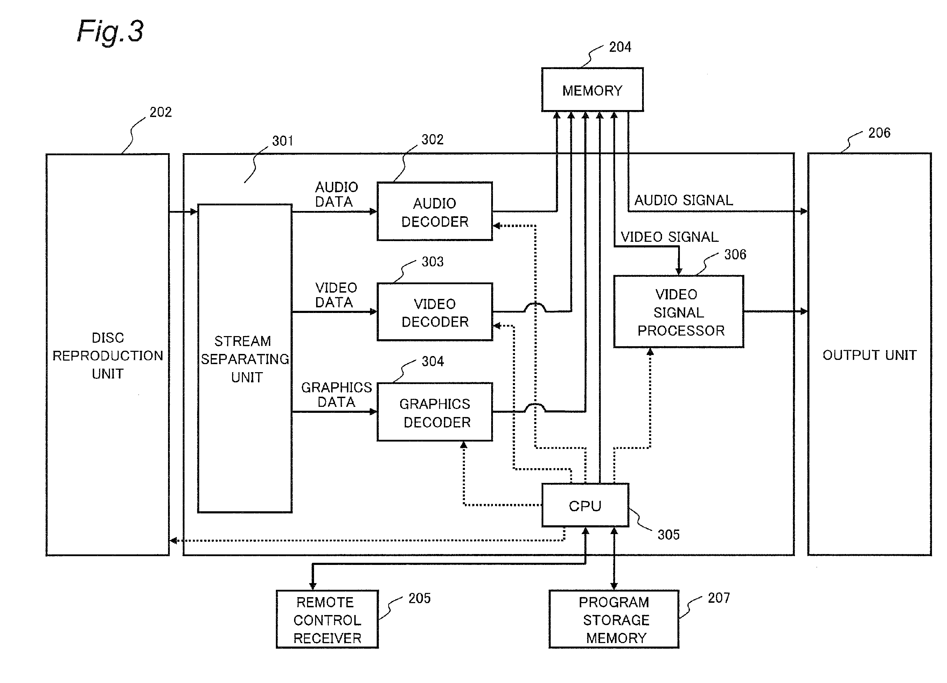

Fig. 3 illustrates a configuration of the signal processor 203. The signal processor 203 has a stream separating unit 301, an audio decoder 302, a video decoder 303, a graphics decoder 304, a CPU 305, and a video signal processor 306.

When the CPU 305 receives a reproduction starting instruction from the user via the remote control receiver 205, the disc reproduction unit 202 reproduces the disc 201. The stream separating unit 301 separates contents read from the disc 201 by the disc reproduction unit 202, namely, into image, sound, graphics, additional data including ID data. The audio decoder 302 decodes the audio data read from the disc 201, and transmits it to the memory 204. The video decoder 303 decodes the image data read from the disc 201, and transmits it to the memory 204. The graphics decoder 304 decodes the graphics data read from the disc 201, and transmits it to the memory 204.

The CPU 305 reads data of the device GUI from the program storage memory 207, and transmits it to the memory 204. When the CPU 305 receives a pop-up quantity correcting instruction from the user via the remote control receiver 205, it instructs the video signal processor 306 to correct the pop-up quantity. The video signal processor 306 adjusts the pop-up quantity of an image according to the instruction from the CPU 305, namely, adjusts an offset amount between the left-eye image data and the right-eye image data, and composes these image data to output it with a 3D image format. Further, the CPU 305 generates device GUI as necessary, and temporarily stores the generated device GUI in the memory 204. The data, such as image, sound, graphics, and device GUI, stored in the memory 204 are composed into left-eye image data and right-eye image data by the video signal processor 306, and the offset amount (pop-up quantity) is adjusted to be outputted to the output unit 206 and outputted with 3D image format from the output unit 206.

### 4. Conceptual Diagram of Three-Dimensional Image

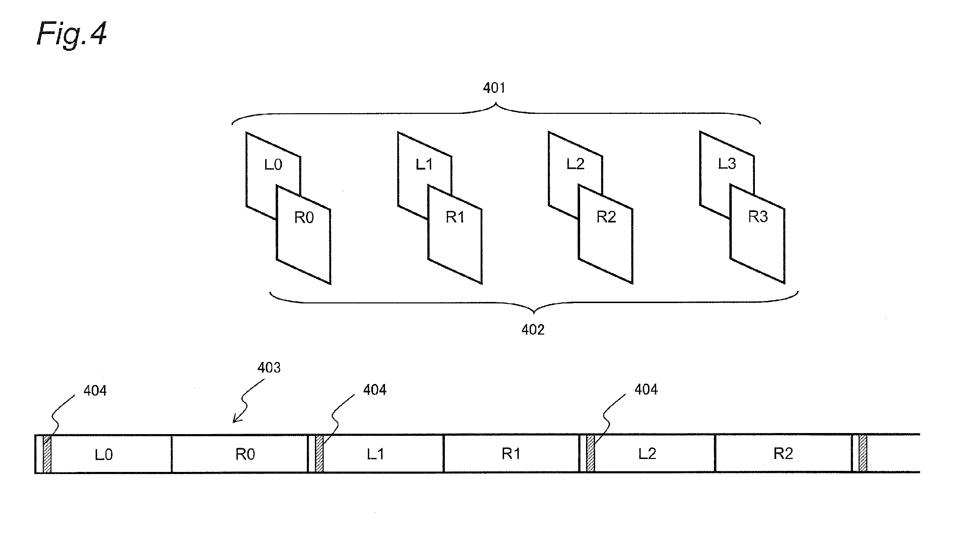

Fig. 4 is a conceptual diagram illustrating a three-dimensional image. Data of a 3D stereoscopic image is composed of left-eye image data 401 (L0, L1, L2, L3 ...) and right-eye image data 402 (R0, R1, R2, R3 ...). Each of L0, L1, L2, L3... and R0, R1, R2, R3... represents data related to each picture. The left-eye image data 401 and the right-eye image data 402 are reproduced as a pair. The left-eye image data 401 (L0, L1, L2, L3 ...) and the right-eye image data 402 (R0, R1, R2, R3 ...) are alternately transmitted as a 3D stream 403 in a picture unit. Information 404 about an offset amount of an object having the largest pop-up quantity on the left-eye picture and on the paired right-eye picture is added to the left-eye picture. This offset amount is obtained by the video decoder 303 so that the largest pop-up quantity on the picture can be detected in each picture.

### 5. Method for adjusting the Offset Amount

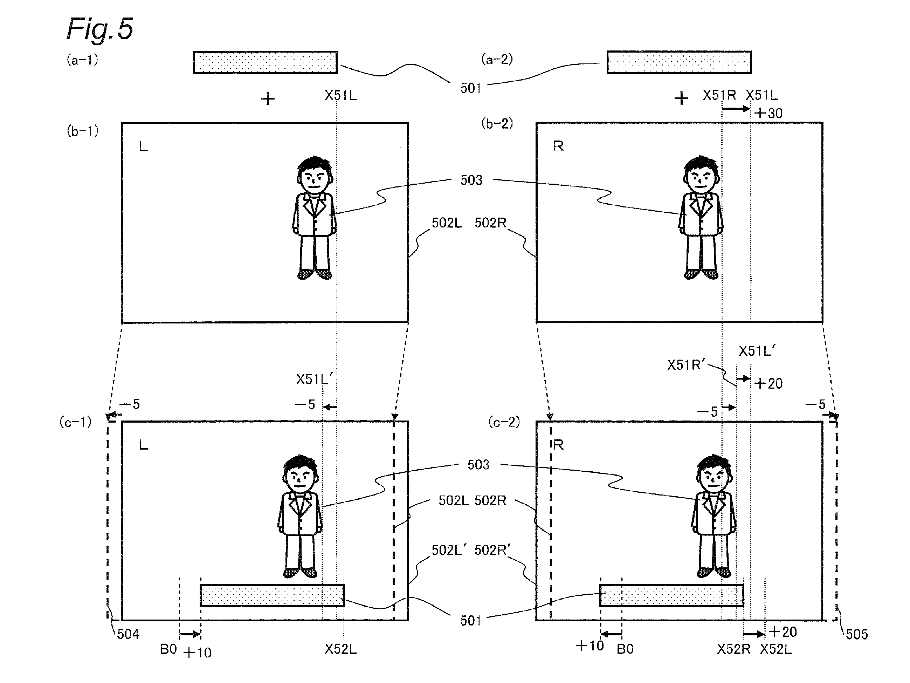

The offset amount is adjusted by the video signal processor 306. Fig. 5 is a diagram for describing the adjustment of the offset amount between the left-eye image and the right-eye image. Figs. 5(a-1) and 5(a-2) illustrate graphics data 501 to be inputted into the video signal processor 306. Figs. 5(b-1) and 5(b-2) illustrate left-eye video(image) data 502L and right-eye video(image) data 502R to be inputted into the video signal processor 306. Figs. S(c-1) and 5(c-2) illustrate video data 502L' and 502R' that are obtained by adjusting an offset to the graphics data 501 and the left-eye and right-eye video data 502L and 502R in the video signal processor 306 and composing them and are outputted from the video signal processor 306. Adjusting the offset amount means adjusting the pop-up quantity of the image.

The left-eye video data 502L shown in Fig. 5(b-1) and the right-eye video data 502R shown in Fig. 5(b-2) include the same object 503. A line X51L shown in Fig. 5(b-1) indicates a right end position of the object 503 in the left-eye video data 502L. Further, a line X51R in Fig. 5(b-2) indicates a right end position of the object 503 in the right-eye video data 502R. Fig. 5(b-2) illustrates the line X51L indicating the right end position of the object 503 of Fig. S(b-1) on the same position as that of the left-eye video data 502L. As is clear from this, in a decoded state, the object 503 included in the left-eye video data 502L is offset right by 30 pixels with respect to the object 503 included in the right-eye video data 502R. For this reason, the object 503 looks as if it pops up from the screen toward the user.

In this embodiment, the offset of the object included in the left-eye video data to a right direction with respect to the same object included in the right-eye video data means an offset to a plus direction, and the offset to the left direction is defined as an offset to a minus direction. When the offset amount to the plus direction increases (a plus value increases), the pop-up quantity of the object from the screen toward the user increases, and when the offset amount to the minus direction increases (the minus value increases), the retraction quantity of the object from the screen to a side (back) opposite to the user increases.

In the reproduction apparatus 101 of this embodiment, the pop-up quantity of an image is adjusted (from the user side to a display apparatus side) at five steps of setting values 1 to 5. For example, the setting value 1 increases the pop-up quantity of an image by the largest quantity, the setting value 3 does not change the pop-up quantity of an image, and the setting value 5 decreases the pop-up quantity of an image by the smallest quantity. In this embodiment, when the user sets the setting value of the pop-up quantity using a remote controller or the like, in the reproduction apparatus 101, the setting values are set as the offset amount between the left-eye image and the right-eye video. Concretely, the setting value 1: +20, the setting value 2: +5, the setting value 3: ±0, and the setting value 4: -5, and the setting value 5: -20 are set by using the offset amount (the number of pixels) of the left-eye video data and the like to the right direction with respect to the right-eye video data and the like. When the setting value 1 is set, the entire left-eye video data is offset right by 20 pixels, the entire right-eye video data is offset left by 20 pixels, and the left-eye video data is offset relatively right (to the plus direction) with respect to the right-eye video data by 40 pixels. When the setting value 2 is set, the entire left-eye video data is offset right by 5 pixels, the entire right-eye video data is offset left by 5 pixels, and the left-eye video data is offset relatively right (to the plus direction) with respect to the right-eye video data by 10 pixels. When the setting value 3 is set, the left-eye video data and the right-eye video data are not offset. When the setting value 4 is set, the entire left-eye video data is offset left by 5 pixels, the entire right-eye video data is offset right by 5 pixels, and the left-eye video data is offset relatively left (to the minus direction) with respect to the right-eye video data by 10 pixels. When the setting value 5 is set, the entire left-eye video data is offset left by 20 pixels, the entire right-eye video data is offset right by 20 pixels, and the left-eye video data is offset relatively left (to the minus direction) with respect to the right-eye video data by 40 pixels.

For example, when the user selects the setting value 4, the left-eye video data 502L is shifted left by 5 pixels as indicated by a dotted line in Fig. 5(c-1), and new left-eye video data 502L' is generated. Further, the right-eye video data 502R is shifted right by 5 pixels as indicated by a dotted line in Fig. 5(c-2), and new right-eye video data 502R' is generated. The object 503 included in the left-eye video data 502L' generated in such a manner is shifted left from the position indicated by the line X51L in the left-eye video data 502L to a position indicated by a line X51L' by 5 pixels. Further, the object 503 included in the right-eye video data 502R' is shifted right from the position indicated by the line X51R in the right-eye video data 502R to a position indicated by the line X51R' by 5 pixels. Therefore, the offset amount of the object 503 in the left-eye video data 502L' and the right-eye video data 502R' is +20 pixels in a manner that totally 10 pixels are subtracted from the offset amount of +30 pixels of the object 503 in the left-eye video data 502L and the right-eye video data 502R. As a result, the adjustment is enabled to a direction where pop-up of a 3D image is repressed.

The graphics data 501 is composed with the left-eye video data 502L and the right-eye video data 502R so that the offset amount of the graphics data 501 is not less than the offset amount of the object 503. For example, the composition is carried out so that the offset amount of the graphics data 501 is the same as the offset amount of the object 503. Concretely, when the graphics data 501 is composed with the left-eye video data 502L, as shown in Fig. 5(c-1), the graphics data 501 is moved right from a reference position B0 common for right and left by 10 pixels to be composed. When the graphics data 501 is composed with the right-eye video data 502L, as shown in Fig. 5(c-2), the graphics data 501 is moved left from the reference position B0 by 10 pixels, for example, to be composed. X52L indicates a right end position of the graphics data 501 in the composed video data 502L', and X52R indicates a right end position of the graphics data 501 in the composed video data 502R'. As is clear from this, the offset amount of the graphics data 501 between the composed video data 502L' and 502R' is +20. That is, the offset amount of the graphics data 501 is the same as the offset amount of the object 503. That is, the pop-up quantities are the same as each other. As a result, uncomfortable feeling like a case where the graphics data 501 is present behind the object 503 is avoided.

### 6. Method for Detecting the Offset Amount

In adjusting the pop-up quantity of an image to a back side (a direction opposite to the user with respect to the screen) (in adjusting the pop-up quantity of the left-eye and right-eye video data and the graphics data to reduce them), when the offset amount to the minus direction is smaller than -50, intervals between the object on left-eye video data and the graphics and between the object on the right-eye video data and the graphics exceed an interval between right and left eyes of a human at the time of display on a 3D television, and thus the user cannot normally recognize a 3D video. In order to solve this problem, in this embodiment, when an image might be broken in a case where the offset amount of the object is smaller than 50, restrictions are placed so that the user does not set the offset amount N to a value smaller than -50.

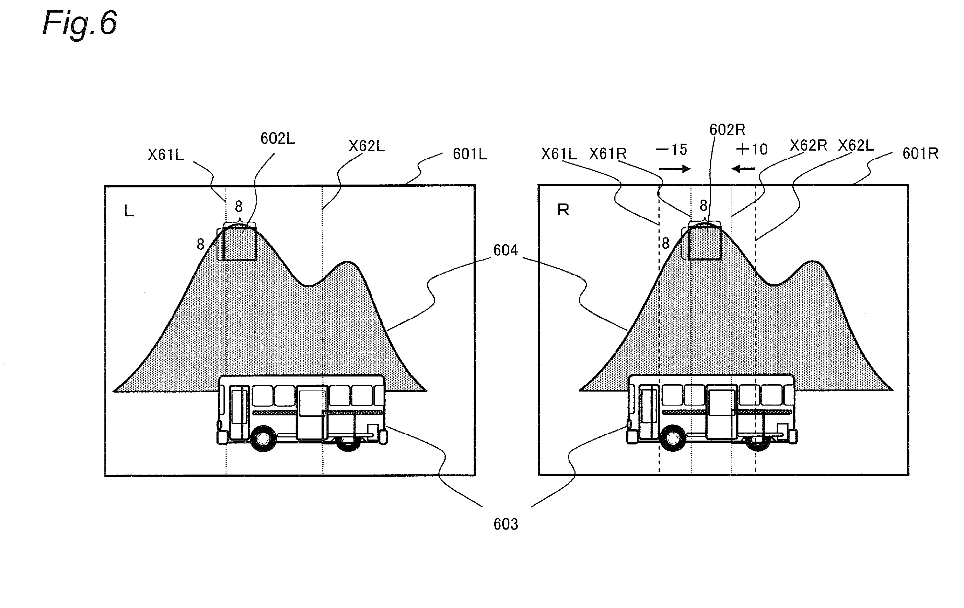

Fig. 6 illustrates a method for detecting the offset amount from the video data decoded by the video decoder 303. In Fig. 6, 601L indicates left-eye video data, and 601R indicates right-eye video data. When the offset amount is detected in the left-eye video data 601L and the right-eye video data 601R, pattern matching can be used. Concretely, differences in levels between positional related pixels in a block of any 8 x 8 pixels in the left-eye video data 601L and a block of any 8 x 8 pixels in the right-eye video data 601R are calculated, and the calculated differences for 8 x 8 pixels are integrated. The block of 8 x 8 pixels of which integrated value is small (for example, not more than a predetermined amount) in the right-eye video data 601R is determined as a block having a pattern closer to the predetermined 8 x 8 pixels in the left-eye video data 601L. That is, the same positions in the left-eye video data 601L and the right-eye video data 601R are determined.

For example, the block of any 8 x 8 pixels in the left-eye video data 601L is denoted by 602L, and the block of 8 x 8 pixels that is determined as the closest pattern to the block 602L of 8 x 8 pixels by pattern matching in the right-eye video data 601R is denoted by 602R. A line X61L in the left-eye video data 601L indicates a left end position of the block 602L of any 8 x 8 pixels in the left-eye video data 601L. A line X61R in the right-eye video data 601R indicates a left end position of the block 602R of any 8 x 8 pixels in the right-eye video data 601R. A line X61L that indicates a left end position of the block 602L of 8 x 8 pixels in the left-eye video data 601L is shown on the position in the right-eye video data 601R that is the same as that in the left-eye video data 601L. The number of pixels between the lines X61L and X61R is detected, so that an offset amount of the block 602R of 8 x 8 pixels in the right-eye video data 601R with respect to the block 602 of predetermined 8 x 8 pixels in the left-eye video data 601L can be detected. Fig. 6 represents a case of that the offset amount is -15 pixels.

Such pattern matching is performed continuously, so that detection can be made that an object 603 in the left-eye video data 601L is identical to the object 603 in the right-eye video data 601R. Further, an offset amount among a line X62L that indicates a predetermined position of the object 603 in the right-eye video data 601R, the object 603 in the left-eye video data 601L, and the right-eye video data 601R can be detected. In this example, the line X62L in the left-eye video data 601L indicates the predetermined position of the object 603 in the left-eye video data 601L, and a line X62R in the right-eye video data 601R indicates the predetermined position of the object 603 in the right-eye video data 601R. The detection can be made that the object 603 in the right-eye video data 601R has offset of, for example, +10 pixels with respect to the object 603 in the left-eye video data 601L and is an image that pops up maximally from the screen to the user side.

Such pattern matching is performed on whole regions of the left-eye video data 601L and the right-eye video data 601R, so that the objects on an image generated by the left-eye video data 601L and the right-eye video data 601R and their offset amounts can be detected. The detected offset amounts are compared, so that detection can be made as to which object is at the backmost side or at the foremost side.

For example, in an image generated from the left-eye video data 601L and the right-eye video data 601R shown in Fig. 6, since an offset amount of the object 603 is +10 and an offset amount of an object 604 including the blocks 602L and 602R is -15, the object 604 including the block 602L (602R) can be detected as an object positioned on the backmost side.

In the case of Fig. 6, when the user adjusts the offset between the left-eye video data 601L and the right-eye video data 601R using the setting value 4: -5, the offset amount of the object 604 on the backmost side including the block 602L (602R) is -25. In this case, since the offset amount is larger than N = -50 where an image is broken, an image is not broken.

As another example, a description will be given of a case where an offset amount of a certain object Ob is detected as - 20 and the setting value 5: -20 for the offset adjustment is set by the user, for example. In this case, when the left-eye video data and the right-eye video data are directly adjusted by 20 pixels, respectively, the offset amount of the object Ob becomes -60. That is, the offset amount is smaller than N = -50, and thus an image is broken. In order to avoid such a problem, in this embodiment, a control is suitably made so that an offset adjusting amount N is changed into -15 or is shifted by one step into the setting value 4: -5, for example. The adjustment is made so that the offset amount N is not smaller than -50. As a result, breakage of an image is prevented. The control for this will be described below.

### 7. Adjusting Procedure of Pop-Up Quantity

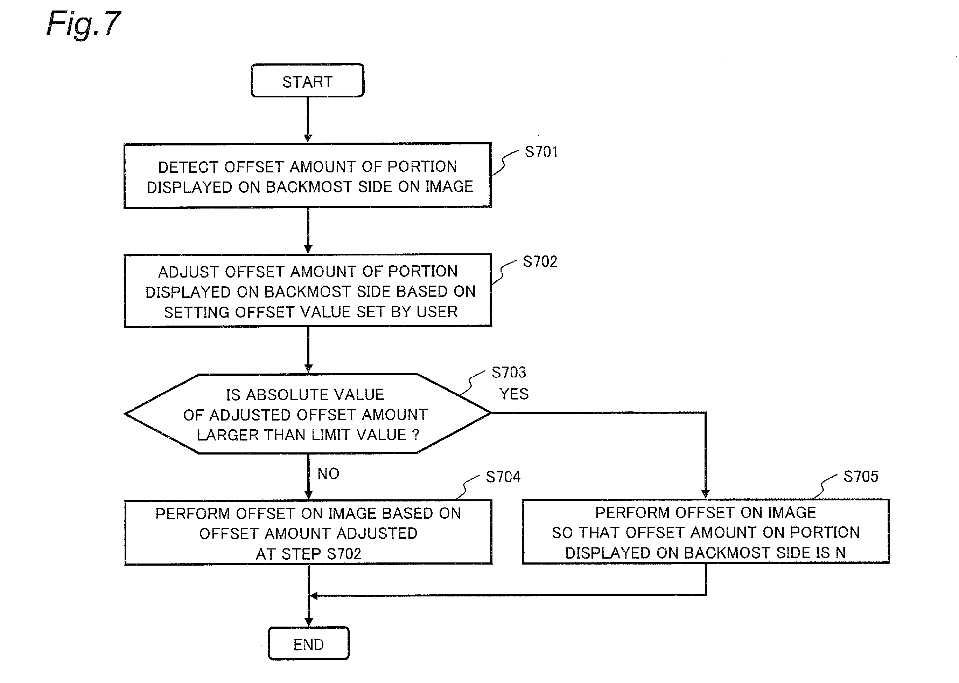

A control for adjusting the pop-up quantity will be described. Fig. 7 is a flowchart illustrating the control for adjusting the pop-up quantity.

An offset amount of a portion displayed on the backmost side on a video generated from the left-eye video data and the right-eye video data is first detected (5701).

The offset amount of the portion displayed on the backmost side in a case where the left-eye video data and the right-eye video data are offset based on the setting value of the pop-up quantity set by the user is adjusted (calculated) (5702).

A determination is made whether an absolute value of the offset amount of the portion displayed on the backmost side adjusted (calculated) at step S702 is larger than a limit value of the offset amount for causing the breakage of an image (the absolute value of N = -50 that might cause the breakage of an image) (S703).

When the absolute value of the offset amount on the portion displayed on the backmost side is larger than the limit value, the offset between the left-eye video data and the right-eye video data is adjusted based on the offset amount calculated at step S702 (S704).

On the other hand, when the absolute value of the offset amount on the portion displayed on the backmost side is smaller than the limit value, the offset between the left-eye video data and the right-eye video data is adjusted so that the offset amount on the portion displayed on the backmost side is N=-50 (S705).

The description has been made on the method for adjusting the offset amount between video data and graphics data, but device GUI generated by a device is occasionally superimposed on video data to be displayed on an image. The method for adjusting the offset amount of the device GUI in this case will be described below.

### 8. Method for Adjusting the Offset Amount of Device GUI

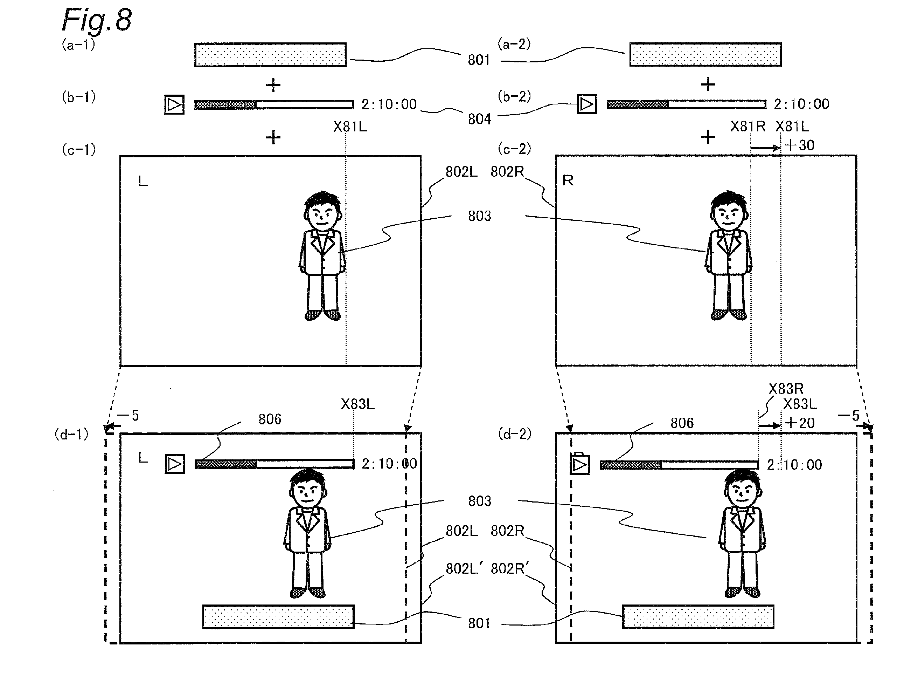

Fig. 8 is an explanatory diagram illustrating the adjustment of the offset amount between the left-eye video and the right-eye video. Figs. 8(a-1) and (a-2) illustrate graphics data 801 to be inputted into the video signal processor 306. Figs. 8(b-1) and 8(b-2) illustrate GUI data 804 to be inputted into the video signal processor 306. Figs. 8(c-1) and 8(c-2) illustrate left-eye video data 802L and right-eye video data 802R to be inputted into the video signal processor 306. Figs. 8(d-1) and (d-2) illustrate video data 802L' and 802R' that are obtained by adjusting an offset on the graphics data 801, the left-eye and right-eye video data 802L and 802R, and left-eye and right-eye device GUI 804L and 804R in the video signal processor 306 and composing them and are outputted from the video signal processor 306.

Since the adjustment of the offset amount on the left-eye video data and the right-eye video data, and the graphics data is described with reference to Fig. 5, the adjustment of the offset amount of the device GUI will be mainly described here.

Further, an initial value of the offset amount at the time when the graphics data 801 shown in Figs. 8(a-1) and 8(a-2) is composed with the left-eye video data 802L and the right-eye video data 802R is set to +20 pixels.

An initial value of the offset amount when the device GUI shown in Figs. 8(b-1) and 8(b-2) is composed with the left-eye video data 802L and the right-eye video data 802R is set to +20 pixels.

A line X81L shown in Fig. 8(c-1) indicates a right end position of an object 803 in the left-eye video data 802L. Further, a line X81R shown in Fig. 8(b-2) indicates a right end position of the object 803 in the right-eye video data 802R. Fig. 8(b-2) illustrates the line X51L indicating the right end position of the object 803 in Fig. 8(b-1) on the same position as that of the left-eye video data 802L. As is clear from this, in Figs. 8(c-1) and 8(c-2), the object 803 included in the left-eye video data 802L is offset by +30 pixels (right by 30 pixels) with respect to the object 803 included in the right-eye video data 802R. For this reason, the object 803 looks as if it pops up from the screen to the user side.

When, for example, the user selects the setting value 4: -5 as the setting value similarly to the case of Fig. 5, the left-eye video data 802L is shifted left by 5 pixels as indicated by a dotted line in Fig. 8(c-1), so that new left-eye video data 802L' is generated. Further, the right-eye video data 802R is shifted right by 5 pixels as indicated by a dotted line in Fig. *8**(c-2),* so that new right-eye video data 802R' is generated. Similarly to the case of Fig. 5, the offset amount of the object 803 in the left-eye video data 802L' and the right-eye video data 802R' is + 20 pixels in such a manner that totally 10 pixels are subtracted from the offset amount +30 pixels of the object 803 in the left-eye video data 802L and the right-eye video data 802R.

When the user selects the setting value 4: -5 as the setting value similarly to the case of Fig. 5, the offset amount of the device GUI 804 is reduced from the initial value +20 by +10 to 10 pixels so that the device GUI 804 is displayed. However, when the device GUI 804 is superimposed on the object 803 as shown in Figs. 8(d-1) and 8(d-2), if it is not always displayed on the fore side with respect to the graphics data 801 and the object 803 in the video data 802L and 802R, the user feels strange and gets tired at the time of visual recognition.

Therefore, in the embodiment, the adjusted offset amount of the device GUI 804 is not set to +10 calculated as described above, but the offset amount of the device GUI 804 is adjusted so as to be +20 as shown in Figs. 8(d-1) and 8(d-2). A line X83L shown in Fig. 8(d-1) indicates a right end position of the device GUI 804 in the left-eye video data 802L. Further, a line X83R in Fig. 8(b-2) indicates a right end position of the device GUI 804 in the right-eye video data 802R. Fig. 8(b-2) illustrates the line X83L indicating the right end position of the object 803 in Fig. 8(b-1) on the same position as that in the left-eye video data 802L.

When the offset amount of the device GUI 804 is adjusted to +20, the offset amounts of the video data 802L and 802R and the graphic data 801 are not changed but only the offset amount of the device GUI 804 may be changed or the offset amounts of the video data 802L and 802R and the graphic data 801 may be also changed in conjunction with the offset amount of the device GUI 804.

On the other hand, not shown, in the case where the offset amount of the object 803 in the video data 802L and 802R is +10 pixels and the offset amount of the device GUI 804 is +20 pixels, when the user selects the setting value 1: +20 as the setting value, the offset amount of the object 803 is +50 pixels and the offset amount of the device GUI 804 is +60 pixels. When the offset amount of various objects composing an image exceeds +50 pixels, the pop-up quantity of the image is too large so that the user feels strange and gets tired at the time of visual recognition. Therefore, in the embodiment, the adjusted offset amount of the device GUI 804 is adjusted not to +60 calculated as described above but to +50.

### 9. Adjusting Procedure of the Pop-Up Quantity of the Device GUI

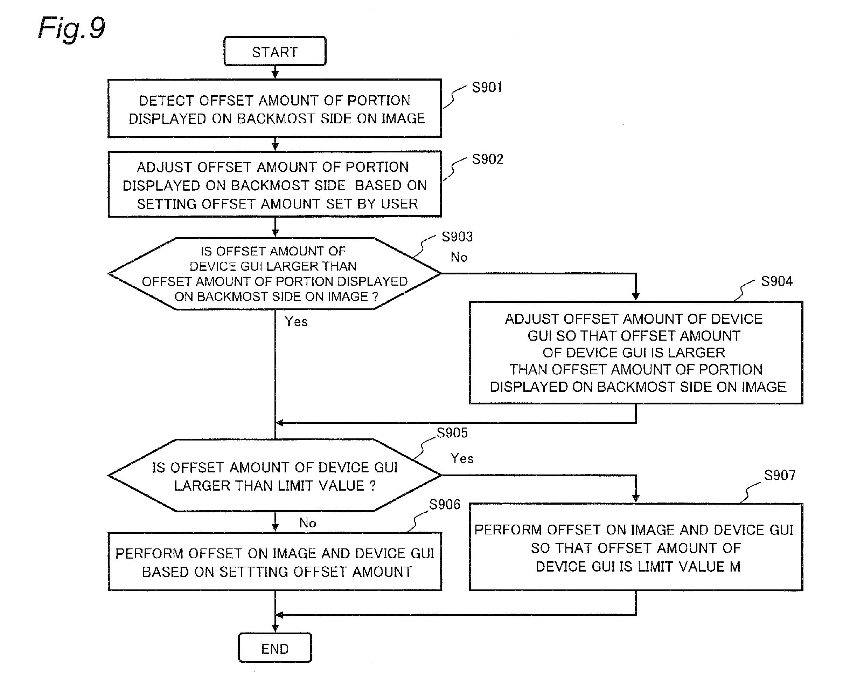

The adjustment of the pop-up quantity in a case where the device GUI is composed will be described. Fig. 9 is a flowchart relating to control for adjusting the pop-up quantity of the device GUI.

First, an offset amount of a portion displayed on the foremost side on an image generated from the left-eye video data and the right-eye video data is first detected (S901).

Next, an offset amount of the device GUI in the case where the left-eye video data and the right-eye video data are offset based on the setting value of the pop-up quantity set by the user is adjusted (calculated) (S902).

Next, a determination is made whether the offset amount of the device GUI adjusted (calculated) at step S902 is larger than an offset amount of an object displayed on the foremost side included in the left-eye video data and the right-eye video data (S903).

When the adjusted (calculated) offset amount of the device GUI is larger than the offset amount of the portion displayed on the foremost side included in the left-eye video data and the right-eye video data (YES), step S905 is executed.

On the contrary, when not larger (NO), the offset amount of the device GUI is adjusted so that the offset amount of the device GUI is larger than the offset amount of the portion displayed on the foremost side included in the left-eye video data and the right-eye video data, and step S905 is executed.

A determination is made at step S905 whether the offset amount of the device GUI is not more than a limit value.

When the offset amount of the device GUI is not more than the limit value, the offset is adjusted for the device GUI based on the offset amount calculated at step S902 (S906).

On the contrary, when the offset amount of the device GUI is more than the limit value, the offset amount is adjusted for the device GUI, the left-eye video data, the right-eye video data, and graphics data so that the offset amount of the device GUI is not more than a predetermined value (S907).

When the offset amount of the device GUI is adjusted according to this flowchart, the device GUI can be prevented from being displayed to get dented with respect to objects or graphics on a video. Further, the pop-up quantity of the device GUI can be prevented from being too large.

### 10. Correspondence Relationship

The remote control receiver 205 is one example of a receiving unit. The video signal processor 306 is one example of a first adjusting unit, a second adjusting unit, and a third adjusting unit. The CPU 305 is one example of a determiner, a first determiner, a second determiner, and a graphic data generator.

### 11. Conclusion

The reproduction apparatus 101 according to the embodiment includes the video decoder 303 for decoding stereoscopic image data into left-eye image data and right-eye image data, the remote control receiver 205 (receiving unit) for receiving an instruction for adjusting an offset amount between the left-eye image data and the right-eye image data, the video signal processor 306 for adjusting an offset amount between the left-eye image data and the right-eye image data so as to be an offset amount based on the instruction, and the CPU 305 for determining whether an absolute value of the offset amount adjusted by the video signal processor 306 is not more than a limit value. When the CPU 305 determines that the adjusted absolute value of the offset amount is more than the limit value, the video signal processor 306 adjusts the offset amount between the left-eye image data and the right-eye image data so that the absolute value of the offset amount between the left-eye image data and the right-eye image data is not more than the limit value.

With the reproduction apparatus 101 according to the embodiment, the user can adjust the offset amount between the left-eye image data and the right-eye image data, namely, the pop-up quantity of an image via the remote control receiver 205. As a result, the user can realize an agreeable pop-up quantity of an image.

When the user can adjust the offset amount between the left-eye image data and the right-eye image data, namely, the pop-up quantity of an image, problematically, the user excessively increases the pop-up quantity and thus easily get tired during visual recognition, or excessively decreases the pop-up quantity and thus an image is broken (the image cannot be recognized).

In order to prevent occurrence of this problem, in the reproduction apparatus 101 according to the embodiment, the determination is made whether the absolute value of the offset amount between the left-eye image data and the right-eye image data adjusted by the user is not more than the limit value, and when the adjusted absolute value of the offset amount is more than the limit value, the offset amount between the left-eye image data and the right-eye image data is adjusted so that the absolute value of the offset amount between the left-eye image data and the right-eye image data is not more than the limit value. As a result, when the user's adjustment of the offset amount is made, an excessive increase or an excessive decrease in the pop-up quantity of an image can be prevented. Therefore, the problem, such that the user excessively increases the pop-up quantity and thus gets tired during visual recognition or excessively decreases the pop-up quantity and thus an image is broken, can be prevented.

The reproduction apparatus 101 according to the embodiment includes the video decoder 303 for decoding stereoscopic image data into left-eye image data and right-eye image data, the CPU 305 for generating left-eye graphic data and right-eye graphic data that are superimposed on the left-eye image data and the right-eye image data, respectively, with a predetermined offset amount, the remote control receiver 205 for receiving an instruction for adjusting the offset amount between the left-eye image data and the right-eye image data, and the video signal processor 306 for adjusting the left-eye image data and the right-eye image data so that an offset amount therebetween is based on the instruction. The CPU 305 determines whether the offset amount between the left-eye graphic data and the right-eye graphic data is larger than the offset amount between the left-eye image data and the right-eye image data adjusted by the video signal processor 306. When the CPU 305 does not determine that the offset amount between the left-eye graphic data and the right-eye graphic data is larger than the adjusted offset amount between the left-eye image data and the right-eye image data, the video signal processor 306 adjusts the offset amount between the left-eye graphic data and the right-eye graphic data so that the offset amount between the left-eye graphic data and the right-eye graphic data becomes larger than the adjusted offset amount between the left-eye image data and the right-eye image data. The CPU 305 determines whether the offset amount between the left-eye graphic data and the right-eye graphic data adjusted by the video signal processor 306 is not more than the limit value. When the adjusted offset amount between the left-eye graphic data and the right-eye graphic data is more than the limit value, the video signal processor 306 adjusts at least the offset amount between the left-eye graphic data and the right-eye graphic data so that the offset amount between the left-eye graphic data and the right-eye graphic data is maintained to be larger than the offset amount between the left-eye image data and the right-eye image data, and the offset amount between the left-eye graphic data and the right-eye graphic data is not more than the limit value.

With the reproduction apparatus 101 according to the embodiment, the user can adjust the offset amount between the left-eye image data and the right-eye image data, namely, the pop-up quantity of an image via the remote control receiver 205 (receiving unit). As a result, the user can realize an agreeable pop-up quantity of an image.

The left-eye graphic data and the right-eye graphic data are occasionally superimposed on the left-eye image data and the right-eye image data. In this case, it is preferable from viewpoints of visibility of a three-dimensional image and prevention of user's tiredness that the offset amount between the left-eye graphic data and the right-eye graphic data is larger than the adjusted offset amount between the left-eye image data and the right-eye image data, namely, the left-eye graphic data and the right-eye graphic data look as if they pop up with respect to the left-eye image data and the right-eye image data. However, when the user can adjust the offset amount between the left-eye image data and the right-eye image data, namely, the pop-up quantity of an image, the offset amount between the left-eye image data and the right-eye image data adjusted by the user might be larger than the offset amount between the left-eye graphic data and the right-eye graphic data. As a result, problematically, the left-eye graphic data and the right-eye graphic data might look as if they get dented behind the left-eye image data and the right-eye image data.

In order to prevent occurrence of this problem, in the reproduction apparatus 101 according to this embodiment, when a predetermined offset amount between the left-eye graphic data and the right-eye graphic data is not larger than the adjusted offset amount between the left-eye image data and the right-eye image data, the offset amount between the left-eye graphic data and the right-eye graphic data is adjusted so that the offset amount between the left-eye graphic data and the right-eye graphic data is larger than the adjusted offset amount between the left-eye image data and the right-eye image data. Therefore, the occurrence of the above problem is prevented.

When the offset amount between the left-eye graphic data and the right-eye graphic data is adjusted in such a manner, the adjusted offset amount should be prevented from exceeding the limit value as described above. Therefore, in the reproduction apparatus 101 according to the embodiment, when the adjusted offset amount between the left-eye graphic data and the right-eye graphic data is more than the limit value, at least the offset amount between the left-eye graphic data and right-eye graphic data is adjusted so that the offset amount of the left-eye graphic data and the right-eye graphic data is maintained to be larger than the offset amount between the left-eye image data and the right-eye image data, and the offset amount between the left-eye graphic data and the right-eye graphic data is not more than the limit value. As a result, the adjustment of the offset amount between the left-eye graphic data and the right-eye graphic data prevents an excessive increase or an excessive decrease in the pop-up quantity of an image. Therefore, the user is prevented from excessively increasing the pop-up quantity and getting tired during visual recognition, or excessively decreasing the pop-up quantity and causing breakage of an image.

### (Other Embodiments)

The first embodiment was illustrated as the embodiment of the present invention. However, the present invention can be applied to others. Other embodiments of the present invention will be described below. The present invention is not limited to them, and can be suitably applied also to modified embodiments.

The CPU 305 may set the limit value to a value according to a size of a display screen of the display apparatus for displaying a stereoscopic image. Since a pixel pitch changes according to the size of the display screen, even when the same offset amount (the number of pixels) is set, an actual offset amount (distance) changes. That is, even when the same offset amount (the number of pixels) is set, an actual pop-up quantity changes. For example, as the size of the display screen is larger, the pixel pitch is larger, and the actual pop-up quantity with respect to the fore side is larger. Therefore, as the size of the display screen is larger, the limit value may be decreased. As a result, the actual pop-up quantity can be prevented from being too large. Further, when the setting value of the offset amount is a value of a minus direction, as the size of the display screen is larger, the actual offset amount is larger, and thus an image is broken more easily. Also in order to solve this problem, as the size of the display screen is larger, the limit value may be smaller. By obtaining the size of the display screen of the display apparatus via HUMI, the limit value can be automatically changed according to a size of the display screen. The CPU 305 in this control is one example of a limit value setting unit.

In the first embodiment, the left-eye image data and the right-eye image data are adjusted so that the offset amount between the left-eye image data and the right-eye image data is not more than the limit value, but the left-eye image data and the right-eye image data may be adjusted so that the offset amount between the left-eye image data and the right-eye image data is a value smaller than the limit value by a predetermined amount. As a result, even when the size of the display screen of the display apparatus for displaying a stereoscopic image is larger, similarly to the above case, the excessive increase in the pop-up quantity and the breakage of an image can be prevented more satisfactorily.

The first embodiment described the case where the initial value is set to +20 as the offset amount of the device GUI, and the offset amount of the device GUI is changed according to the offset amount adjusted by the user. However, the present invention can be applied also to a case where the offset amount of the device GUI follows information 404 regarding the offset amount of an object to be changed. For example, the present invention can be applied to a case where a value that is obtained by adding the offset amount for +5 pixels, for example, to the offset amount obtained from the information 404 is used as the offset amount of the device GUI. Further, in this case, the present invention can be applied also to a case where the offset amount of the device GUI is changed according to the offset amount adjusted by the user.

Further, the present invention can be applied to subtitles that can be switched between on and off in image contents such as movies.

In the first embodiment, the display apparatus 102 alternately switches a left-eye image and a right-eye image to display them, and the right and left shutters of the 3D glasses 103 are alternately switched in synchronization with the switching of the images. However, the configuration may be as follows. That is, the display apparatus 102 displays the left-eye image and the right-eye image separately on each odd-numbered line and even-numbered line, and different polarizing films are stuck to the odd-numbered lines and the even-numbered lines on the display unit. Further, the 3D glasses 103 do not adopt the liquid crystal shutter, but polarizing filters of different directions are stuck to the left-eye lens and the right-eye lens, respectively, so as to be capable of separating a left-eye image from a right-eye image. Further, the display apparatus may be constituted so that a left-eye image and a right-eye image are displayed alternately on each pixel in a lateral direction, and polarizing films having different polarizing faces are alternately stuck to the respective pixels on the display unit. In short, left-eye and right-eye image data may be provided to right and left eyes of the user, respectively.

In this embodiment, the reproduction apparatus 101 reproduces data recorded in the disc 201 as a 3D image, but the 3D image may be a data stream via a broadcasting station or a network, data recorded in a recording medium such as, a Blu-ray disc, a DVD disc, a memory card, and a USB memory.

### Industrial Applicability

In the reproduction apparatus according to the present invention, the user can adjust the offset amount between the left-eye image data and the right-eye image data via the receiving unit, namely, the pop-up quantity of an image. As a result, the user can realize the agreeable pop-up quantity of an image. Further, the adjustment of the offset amount by the user prevents the pop-up quantity of an image from excessively increasing or excessively decreasing. This, therefore, prevents the occurrence of the problems such that the user excessively increases the pop-up quantity and thus gets tired during visual recognition, and excessively decreases the pop-up quantity and thus an image is broken.

The present invention can be applied to three-dimensional image compatible devices such as a 3D Blu-ray disc player, a 3D Blu-ray disc recorder, a 3D DVD player, a 3D DVD recorder, a 3D broadcasting receiver, a 3D television, a 3D image display terminal, a 3D mobile telephone terminal, a 3D car navigation system, a 3D digital still camera, a 3D digital movie, a 3D network player, a 3D compatible computer or a 3D compatible game player.

### Description of Reference Numerals

- 101: REPRODUCTION APPARATUS
- 102: DISPLAY APPARATUS
- 103: 3D GLASSES
- 201: DISC
- 202: DISC REPRODUCTION UNIT
- 203: SIGNAL PROCESSOR
- 204: MEMORY
- 205: REMOTE CONTROL RECEIVER
- 206: OUTPUT UNIT
- 207: PROGRAM STORAGE MEMORY
- 301: STREAM SEPARATING UNIT
- 302: AUDIO DECODER
- 303: VIDEO DECODER
- 304: GRAPHICS DECODER
- 305: CPU
- 306: VIDEO SIGNAL PROCESSOR

## Claims

1. A reproduction apparatus, comprising:
a decoder that decodes stereoscopic image data into left-eye image data and right-eye image data;
a receiving unit that receives an instruction for adjusting an offset amount between the left-eye image data and the right-eye image data;
a first adjusting unit that adjusts the offset amount between the left-eye image data and the right-eye image data to the offset amount based on the instruction;
a determiner that determines whether an absolute value of the offset amount between the left-eye image data and the right-eye image data adjusted by the first adjusting unit is not more than a limit value; and
a second adjusting unit that, when the absolute value of the offset amount between the left-eye image data and the right-eye image data adjusted by the first adjusting unit is more than the limit value, adjusts the offset amount between the left-eye image data and the right-eye image data so that the absolute value of the offset amount between the left-eye image data and the right-eye image data is not more than the limit value.

2. The reproduction apparatus according to claim 1, wherein when the absolute value of the offset amount between the left-eye image data and the right-eye image data adjusted by the first adjusting unit is more than the limit value, the second adjusting unit adjusts the offset amount between the left-eye image data and the right-eye image data so that the absolute value of the offset amount between the left-eye image data and the right-eye image data is smaller than the limit value by a predetermined amount.

3. The reproduction apparatus according to claim 1, comprising a limit value setting unit that sets the limit value to a value according to a size of a display screen of the display apparatus for displaying a stereoscopic image.

4. A reproduction apparatus, comprising:
a decoder that decodes stereoscopic image data into left-eye image data and right-eye image data;
a graphic data generator that generates left-eye graphic data and right-eye graphic data that are to be superimposed on the left-eye image data and the right-eye image data, respectively, by a predetermined offset amount;
a receiving unit that receives an instruction for adjusting an offset amount between the left-eye image data and the right-eye image data;
a first adjusting unit that adjusts the offset amount between the left-eye image data and the right-eye image data to the offset amount based on the instruction;
a first determiner that determines whether the predetermined offset amount between the left-eye graphic data and the right-eye graphic data is larger than the offset amount between the left-eye image data and the right-eye image data adjusted by the first adjusting unit;
a second adjusting unit that, when the first determiner does not determine that the predetermined offset amount between the left-eye graphic data and the right-eye graphic data is larger than the offset amount between the left-eye image data and the right-eye image data adjusted by the first adjusting unit, adjusts the offset amount between the left-eye graphic data and the right-eye graphic data so that the offset amount between the left-eye graphic data and the right-eye graphic data is larger than the offset amount between the left-eye image data and the right-eye image data adjusted by the first adjusting unit;
a second determiner that determines whether the offset amount between the left-eye graphic data and the right-eye graphic data adjusted by the second adjusting unit is not more than a limit value; and
a third adjusting unit that, when the offset amount between the left-eye graphic data and the right-eye graphic data adjusted by the second adjusting unit is more than the limit value, adjusts at least the offset amount between the left-eye graphic data and the right-eye graphic data so that the offset amount between the left-eye graphic data and the right-eye graphic data is maintained to be larger than the offset amount between the left-eye image data and the right-eye image data adjusted by the first adjusting unit and the offset amount between the left-eye graphic data and the right-eye graphic data adjusted by the second adjusting unit is not more than the limit value.

5. The reproduction apparatus according to claim 4, wherein when the offset amount between the left-eye graphic data and the right-eye graphic data adjusted by the second adjusting unit is more than the limit value, the third adjusting unit adjusts the offset amount to a value smaller than the limit value by a predetermined amount.

6. The reproduction apparatus according to claim 4, comprising a limit value setting unit that sets the limit value to a value that varies according to a size of a display screen for displaying a stereoscopic image.
